Europäisches Patentamt

European Patent Office

Office européen des brevets

(11) Veröffentlichungsnummer : **0 055 831**
B1

(12) # EUROPÄISCHE PATENTSCHRIFT

(45) Veröffentlichungstag der Patentschrift :
21.11.85

(51) Int. Cl.⁴ : **B 65 G 53/08**, B 65 G 53/48

(21) Anmeldenummer : 81110136.9

(22) Anmeldetag : 04.12.81

(54) Vorrichtung zum Einschleusen von pulverförmigem Gut.

(30) Priorität : 02.01.81 DE 3100050

(43) Veröffentlichungstag der Anmeldung :
14.07.82 Patentblatt 82/28

(45) Bekanntmachung des Hinweises auf die Patenterteilung : 21.11.85 Patentblatt 85/47

(84) Benannte Vertragsstaaten :
CH DE FR GB IT LI SE

(56) Entgegenhaltungen :
DE-A- 2 729 863
DE-B- 1 249 763
DE-C- 2 507 687
Die Akte enthält technische Angaben, die nach dem
Eingang der Anmeldung eingereicht wurden und die
nicht in dieser Patentschrift enthalten sind.

(73) Patentinhaber : IBAU HAMBURG Ingenieurgesellschaft Industriebau mbH
Amsinckstrasse 45
D-2000 Hamburg 1 (DE)

(72) Erfinder : Delfs, Hans-Jürgen
Kahden 35
D-2000 Hamburg 65 (DE)

(74) Vertreter : von Raffay, Vincenz, Dipl.-Ing. et al
Patentanwälte Raffay, Fleck & Partner Postfach 32 32
17
D-2000 Hamburg 13 (DE)

EP 0 055 831 B1

**Beschreibung**

Gemäß dem Oberbegriff des Patentanspruchs 1 betrifft die Erfindung eine Vorrichtung zum Einschleusen von pulverförmigem Gut in eine unter Überdruck stehende Förderleitung durch eine fliegend gelagerte Schnecke, deren Schneckengehäuse über das Ende der Schnecke bis zu einer am Beginn der Förderleitung angeordneten Rückschlagklappe verlängert ist.

In der DE-C-25 07 687, die eine Vorrichtung der vorstehend genannten Art zum Gegenstand hat, ist die Problematik, die bei derartigen Vorrichtungen auftritt, eingehend beschrieben. Die Länge des Abschnittes des Schneckengehäuses, der die Schnecke in Richtung auf die Rückschlagklappe überragt, ist in engen Grenzen sehr kritisch, um einen Materialpfropfen richtiger Länge zu bilden, der zwar für eine ausreichende Abdichtung sorgt, aber möglichst wenig zusätzliche Energie beansprucht. Um die Länge dieses Abschnittes in engen Grenzen so verstellen zu können, daß der Materialpfropfen die entsprechend gewünschte Länge aufweist, wird in dieser Patentschrift vorgeschlagen, mehr oder weniger starke Ringe zur Verlängerung des Schneckengehäuses vor der Rückschlagklappe einzusetzen und damit den entsprechenden Abschnitt des Schneckengehäuses verstellen zu können.

Bei einer anderen Vorrichtung (DE-A-27 29 863) bei der es sich um eine Betonpumpe zum Betonspritzen handelt, ist es bereits vorgeschlagen worden, im Anschluß an die Schnecke einen sich konisch erweiternden Stauabschnitt vorzusehen. Bei diesen sog. Betonpumpen ist die Abdichtung nicht so kritisch, wie bei den Vorrichtungen der eingangs genannten Art, da das Material hier nur gegen einen verhältnismäßig geringen Überdruck gefördert werden muß, der durch die im Anschluß an den Stauabschnitt eingegebene Förderluft bestimmt ist.

Der Erfindung liegt nun die Aufgabe zugrunde, eine Vorrichtung der eingangs genannten Art zu schaffen, die zur Anpassung an andere Materialien und Betriebszustände nicht fortwährend umgerüstet werden muß, dabei aber eine sichere Abdichtung gewährleistet und gleichzeitig möglichst geringe Energie zum Antrieb der Schnecke benötigt und damit einen geringen Verschleiß aufweist.

Diese Aufgabe wird dadurch gelöst, daß die Verlängerung des Schneckengehäuses als sich in Förderrichtung erweiternde Kammer ausgebildet ist.

Dadurch, daß zwischen Schnecke und Rückschlagklappe eine sich erweiternde (in vorteilhafter Weise konisch erweiternde) Kammer zwischengeschaltet ist, wird nicht nur ein ausreichender Raum zur Ansammlung von abdichtenden (einen Luftrückschlag verhindernden) Material geschaffen, sondern dieser Raum ist aufgrund seiner Erweiterung in Förderrichtung auch noch so ausgebildet, daß in Förderrichtung einerseits eine Keilwirkung des Fördergutes verhindert, andererseits in entgegengesetzter Richtung eine Keilwirkung und damit eine bessere Abdichtung unterstützt wird.

Bei der Vorrichtung nach der Erfindung wird die Abdichtung gegen die Förderleitung, die unter höherem Druck steht, durch einen verhältnismäßig großen (langen) Stopfen durchgeführt. Trotz dieses langen Stopfens wird eine übermäßige Energieaufnahme vermieden, da die in einem zylindrischen Rohr auftretende Keilwirkung in Förderrichtung verhindert wird. Die Schnecke ist im wesentlichen Zuführ- und Entlüftungsgerät, so daß die Schnecke kurz ausgebildet sein kann. Eine beidseitige Lagerung der Schnecke ist nicht erforderlich. Die Schnecke ist daher einfach aufgebaut und läuft dennoch ruhig.

Der Stopfen in der sich erweiternden Kammer nach der Erfindung wird nie leer, denn der Druck in der Förderleitung preßt den Stopfen zusammen und zurück, wenn kein Fördergut durch die Schnecke nachgeschoben wird. Es ist praktisch ein Druckabschluß bei Null-Last möglich.

Weiterhin ist das Min-Last Verhältnis günstig. Eine Stopfbuchse im Druckraum, wie sie bei beidseitiger Lagerung der Schnecke erforderlich ist, wird vermieden. Das Ende der Schnecke ist leicht zugänglich, so daß dieses Ende, an dem der wesentliche Verschleiß auftritt, leicht ausgewechselt werden kann. Diese Zugänglichkeit und Auswechselbarkeit gilt auch für andere Verschleißteile. Die Schnecke läuft ruhig, da sie verhältnismäßig kurz ist. Lagerprobleme durch Schwingungen treten nicht auf. Gemäß einer bevorzugten Ausführungsform der Erfindung ist die Kammer konisch erweitert.

Die Ausbildung der Erweiterung kann in der unterschiedlichsten Weise, z. B. auch durch und/oder mit einem Absatz angrenzend an die Schnecke erreicht werden.

Während der Förderung findet die Entlüftung durch die Schnecke statt. Um diese Entlüftung zu unterstützen, kann der Einlauf durch eine Trennwand unterteilt sein, die eine Extraentlüftung schafft.

Auch ist es möglich, im Schneckengehäuse am Einlauf im oberen Bereich eine Entlüftungsnut vorzusehen.

Da die Schnecke nur einseitig (am Einlauf) gelagert ist, ist es möglich, die Rückschlagklappe stirnseitig an dem entsprechenden Ende der sich erweiternden Kammer anzuordnen, und zwar durch einen Winkelhebel derart, daß praktisch eine parallele Öffnung stattfindet, d. h. der beim Öffnen der Rückschlagklappe entstehende ringförmige Querschnitt ist über den gesamten Umfang ungefähr gleich groß, wodurch eine ungleichmäßige Belastung verhindert und ein gleichmäßiger Austritt der Fördergutes ermöglicht wird.

Im folgenden wird die Erfindung unter Hinweis auf die Zeichnung anhand verschiedener Ausführungsbeispiele näher erläutert.

Es zeigt :

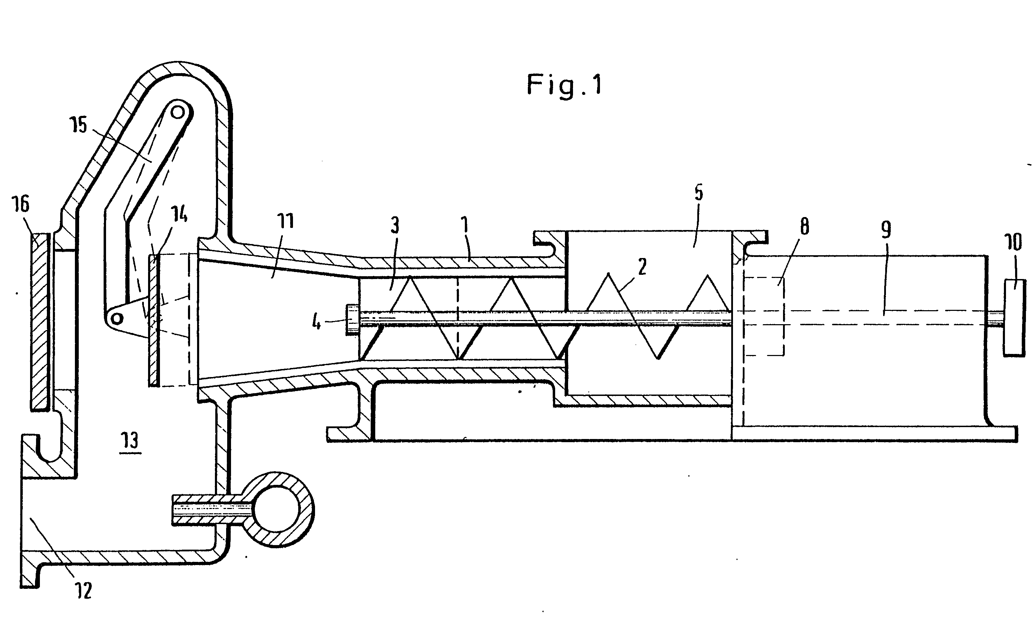

Figur 1 einen Längsschnitt durch eine Ausführungsform nach der Erfindung ;

Figur 2 eine Teilansicht einer anderen Ausführungsform, und zwar des Schneckengehäuses am Einlauf ; und

Figur 3 eine Teilansicht einer anderen Ausführungsform der sich erweiternden Kammer.

Die in der Zeichnung dargestellte Vorrichtung besteht aus einem Schneckengehäuse 1, in dem eine Schnecke 2 drehbar gelagert ist. Das Abförderende 3 der Schnecke ist auswechselbar. Zu diesem Zweck ist eine Schraube 4 vorgesehen.

Der Einlauf 5 kann durch eine Trennwand 6 unterteilt werden, um eine Entlüftung 7 zu schaffen.

Eine Stopfbuchse 8 für die Antriebswelle 9 dichtet das Schneckengehäuse gegen diesen Bereich ab. Der Antrieb ist mit 10 bezeichnet.

An das Abförderende der Schnecke schließt sich eine — bei dieser Ausführungsform — konisch erweiternde Kammer 11 an. Die Kammer 11 mündet in einen Raum 13, der die Verbindung mit der Förderleitung 12 herstellt und die Rückschlagklappe 14 mit ihrem Winkelhebel 15 aufnimmt. Ein Deckel, der im wesentlichen der Montage und der Wartung dient, ist mit 16 bezeichnet.

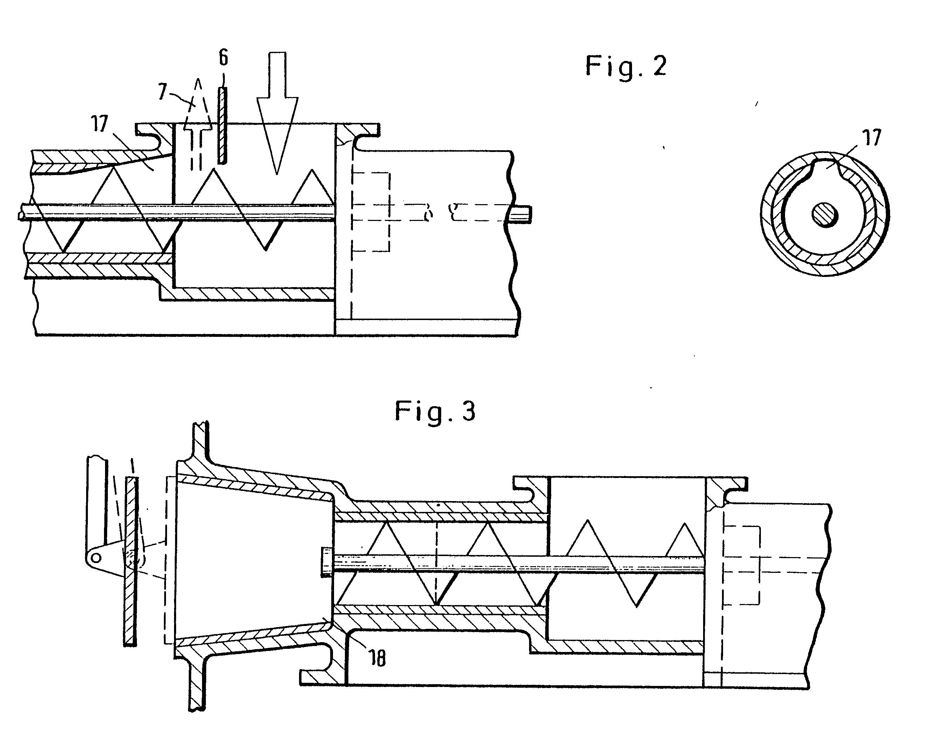

In Fig. 2 ist im Bereich des Einlauf oben im Schneckengehäuse eine Entlüftungsnut 17 dargestellt, die für eine bessere Entlüftung sorgen kann, wenn dieses gewünscht wird. .

Die Fig. 3 zeigt eine anders gestaltete Kammer 11 mit einem Absatz 18 angrenzend an die Schnecke.

Im Betrieb wird das Fördergut bei 5 eingegeben und durch die Schnecke 2 in die Kammer 11 gedrückt. Gegen die Rückschlagklappe wird das Gut bei fortlaufender Förderung und Gutzuführung in die Förderleitung 12, die einen höheren Druck aufweist, gefördert. Die Entlüftung bei dieser normalen Förderung findet über die Schnecke und den Einlauf statt. Die Trennwand 6 und gegebenenfalls die Entlüftungsnut 17 können die Entlüftung unterstützen.

Wenn kein Gut zugeführt wird oder die Schnecke zum Stillstand kommt, drückt der Druck in der Förderleitung 12 das Fördergut in der Kammer 11 in Richtung auf die Schnecke zusammen, so daß hier eine gute und wirksame Abdichtung entsteht, die aber außerhalb des Wirkungsbereiches der Schnecke liegt. Wenn die Förderung jetzt wieder beginnt, so wird das Fördergut in der Kammer 11 in entgegengesetzter Richtung unter Druck gesetzt und die normale und erwünschte Förderung beginnt ohne Behinderung, da die Kammer 11 sich in Förderrichtung erweitert und so eine Keilwirkung in dieser Richtung verhindert wird.

Die Rückschlagklappe 14 ist durch den Winkelhebel 15 so angelenkt, daß sie sich « quasi parallel » öffnet, wie dieses gestrichelt dargestellt ist. Hierdurch entsteht ein gleichmäßiger ringförmiger Öffnungsquerschnitt.

**Patentansprüche**

1. Vorrichtung zum Einschleusen von pulverförmigem Gut in eine unter Überdruck stehende Förderleitung (12) durch eine fliegend gelagerte Schnecke (2), deren Schneckengehäuse (1) über das Ende der Schnecke bis zu einer am Beginn der Förderleitung angeordneten Rückschlagklappe (14) verlängert ist, dadurch gekennzeichnet, daß die Verlängerung des Schneckengehäuses (1) als sich in Förderrichtung erweiternde Kammer (11) ausgebildet ist.

2. Vorrichtung nach Anspruch 1, dadurch gekennzeichnet, daß sich die Kammer (11) konisch erweitert.

3. Vorrichtung nach Anspruch 1 oder 2, dadurch gekennzeichnet, daß die Kammer (11) angrenzend an die Schnecke (2) einen Absatz (18) aufweist.

4. Vorrichtung nach Anspruch 1, dadurch gekennzeichnet, daß am Einlauf (5) eine Trennwand (6) zur Bildung einer Entlüftung (7) vorgesehen ist.

5. Vorrichtung nach Anspruch 1 oder 4, dadurch gekennzeichnet, daß im Schneckengehäuse (1) am Einlauf (5) im oberen Bereich eine Entlüftungsnut (17) vorgesehen ist.

6. Vorrichtung nach einem oder mehreren der vorstehenden Ansprüche, dadurch gekennzeichnet, daß das Ende (3) der Schnecke (2) auswechselbar ist.

7. Vorrichtung nach einem oder mehreren der vorstehenden Ansprüche, dadurch gekennzeichnet, daß die Rückschlagklappe (14) so angelenkt ist, daß sie nahezu parallel vom Sitz abhebt.

**Claims**

1. Apparatus for injecting pulverulent material into a conveying pipe (12) under an overpressure by an overhead-mounted worm (2), whose worm casing is extended beyond the end of the worm, up to a check valve (14) positioned at the start of the conveying pipe, characterized in that the extension of the worm casing (1) is constructed as a chamber (11) widening in the conveying direction.

2. Apparatus according to claim 1, characterized in that the chamber (11) conically widens.

3. Apparatus according to claims 1 or 2, characterized in that the chamber (11) has a shoulder (18) adjacent to the worm (2).

4. Apparatus according to claim 1, characterized in that a partition (6) for forming ventilation (7) is provided at the inlet (5).

5. Apparatus according to claims 1 or 4, characterized in that a ventilating slot (17) is provided at the inlet (5) in the upper area of the worm casing (1).

6. Apparatus according to claim 1, characterized in that the end (3) of the worm (2) is interchangeable.

7. Apparatus according to claim 1, characterized in that the check valve (14) is articulated in such a way that it is raised from its seat in an almost parallel manner.

## Revendications

1. Dispositif d'éclusage de marchandises pulvérulentes dans une conduite de transport (12) à surpression à travers une vis sans fin (2) montée en porte-à-faux dont la boîte (1) se prolonge au-delà de l'extrémité de la vis sans fin jusqu'à un clapet de retenue (14) situé au commencement de la conduite de transport, caractérisé en ce que la prolongation de la boîte (1) de la vis sans fin est formée comme une chambre (11) s'élargissant dans le sens du transport.

2. Dispositif selon la revendication 1, caractérisé en ce que la chambre (11) s'élargit en forme de cône.

3. Dispositif selon la revendication 1 ou 2, caractérisé en ce que la chambre (11) présente une saillie (18) contiguë à la vis sans fin (2).

4. Dispositif selon la revendication 1, caractérisé en ce qu'une cloison de séparation (6) est prévue à l'entrée (5) pour former une désaération (7).

5. Dispositif selon la revendication 1 ou 4, caractérisé en ce qu'une encoche de désaération (17) est prévue dans la boîte (1) de la vis sans fin dans la zone supérieure de l'entrée (5).

6. Dispositif selon l'une ou plusieurs des revendications précédentes, caractérisé en ce que l'extrémité (3) de la vis sans fin (2) peut être remplacée.

7. Dispositif selon l'une ou plusieurs des revendications précédentes, caractérisé en ce que le clapet de retenue (14) est articulé de manière à se lever de son logement de manière pratiquement parallèle.

Fig.1

0 055 831

Fig. 2

Fig. 3

0 055 831